# EUROPEAN PATENT APPLICATION

(11) **EP 2 937 832 A1**
(43) Date of publication of application: **28.10.2015**
(21) Application number: 13865898.4
(22) Date of filing: 18.12.2013
(51) Int. Cl.: G06Q 50/06, H04L 12/12

(54) **METHOD AND DEVICE FOR MANAGING ENERGY CONSUMPTION IN HOME NETWORK SYSTEM**

(30) Priority: 18.12.2012 KR 20120148450; 30.09.2013 KR 20130115856
(71) Applicant: Samsung Electronics Co., Ltd., Suwon-si, Gyeonggi-do 443-742 (KR)
(72) Inventor: SONG, Kwan-Woo, Yongin-si Gyeonggi-do 448-932 (KR); KWEON, Ji-Hyeon, Yongin-si Gyeonggi-do 446-708 (KR); MIN, Hyun-Suk, Suwon-si Gyeonggi-do 443-811 (KR); JEON, Jong-Gu, Seongnam-si Gyeonggi-do 463-785 (KR)
(74) Representative: Birchenough, Lewis
(86) International application number: PCT/KR2013/011827
(87) International publication number: WO 2014/098481

(57) **Abstract**

The present invention relates to a method and device for managing energy consumption in a home network system including a plurality of home devices. The method of the present invention includes: collecting the results of measuring the power consumption of each of a plurality of home devices; analyzing the collected results and generating power consumption information on the plurality of home devices; and transmitting the power consumption information to user devices when there are requests for transmitting the power consumption information from the user devices, wherein the power consumption information is power consumption information on each residential room.

## Description

### [Technical Field]

The present disclosure generally relates to a home network system, and more particularly, to a method and apparatus for determining and controlling in-home power consumption on a real-time basis.

### [Background Art]

A home network system refers to a system in which various home devices installed in home are connected over a wired or wireless network to enable communication between the home devices. An advanced home network system integrates home devices through a Home Gateway (HGW or H-GW) to connect them over an external public data network, for example, an Internet Protocol (IP) network (that is, the Internet), thus providing a wider variety of services associated with the Internet. The home network system may control home devices according to users' demands to provide services desired by the users.

As types of home devices have been diversified and users' demands have also been diversified accordingly, a need has arisen for much effort to accept various users' demands and provide the best services.

### [Disclosure]

### [Technical Problem]

Accordingly, an aspect of the present disclosure is to provide a method and apparatus for efficiently managing energy consumption in a home network system.

Another aspect of the present disclosure is to provide a method and apparatus for efficiently determining an energy consumption state in a home network system.

Still another aspect of the present disclosure is to provide a method and apparatus for efficiently reducing energy consumption in a home network system.

### [Technical Solution]

In accordance with an aspect of the present disclosure, there is provided a method for managing energy consumption in a home network system including multiple home devices, the method including collecting measurement results of power consumptions of the respective multiple home devices, generating power consumption information of the multiple home devices by analyzing the collected measurement results, and transmitting the generated power consumption information to a user device if receiving a request for transmitting the power consumption information from the user device, in which the power consumption information includes in-home room-specific power consumption information.

In accordance with another aspect of the present disclosure, there is provided an apparatus for managing energy consumption in a home network system including multiple home devices, the apparatus including at least one communication module configured to communicate with the multiple home devices and a user device in a wired/wireless manner and a controller configured to collect measurement results of power consumptions of the respective multiple home devices through the communication module, generate power consumption information of the multiple home devices by analyzing the collected measurement results, and transmit the generated power consumption information to a user device if receiving a request for transmitting the power consumption information from the user device, in which the power consumption information includes in-home room-specific power consumption information.

In accordance with still another aspect of the present disclosure, there is provided a method for managing energy consumption in a home network system including multiple home devices, the method including sending a request for power consumption information to a network entity, the network entity collecting measurement results of power consumptions of the respective multiple home devices and generating the power consumption information of the multiple home devices by analyzing the collected measurement results and receiving the power consumption information from the network entity in response to the request, in which the power consumption information includes in-home room-specific power consumption information.

In accordance with yet another aspect of the present disclosure, there is provided a user device in a home network system including multiple home devices, the user device including at least one communication module configured to communicate with a network entity that controls operations of the multiple home devices and a controller configured to control an operation of sending a request for power consumption information to the network entity and an operation of receiving the power consumption information from the network entity in response to the request, the network entity collecting measurement results of power consumptions of the respective multiple home devices and generating the power consumption information of the multiple home devices by analyzing the collected measurement results, in which the power consumption information includes in-home room-specific power consumption information.

### [Description of Drawings]

FIG. 1 is a schematic diagram illustrating a structure of a home network system according to an embodiment of the present disclosure;
FIG. 2a is a schematic diagram illustrating a structure of a home network system connectable with a mobile terminal according to an embodiment of the present disclosure;
FIG. 2b is a schematic diagram illustrating another structure of a home network system connectable with a mobile terminal according to an embodiment of the present disclosure;
FIG. 3 is a block diagram illustrating a structure of a Home Gateway (HGW) according to an embodiment of the present disclosure;
FIG. 4 is a block diagram illustrating a structure of a mobile terminal according to an embodiment of the present disclosure;
FIG. 5 is a block diagram illustrating a structure of a home network system that manages energy consumption according to an embodiment of the present disclosure;
FIG. 6 is a block diagram illustrating an example of a structure of a user device according to an embodiment of the present disclosure;
FIG. 7 is a ladder diagram illustrating a procedure for registering a home device according to an embodiment of the present disclosure;
FIG. 8 is a ladder diagram illustrating a procedure for registering a mobile terminal according to an embodiment of the present disclosure;
FIG. 9 is a diagram illustrating an energy consumption state determining procedure executed in a home network system according to an embodiment of the present disclosure;
FIGs. 10a and 10b are diagrams illustrating examples of a screen of a user device that displays an energy consumption state according to an embodiment of the present disclosure;
FIG. 11 is a diagram illustrating an energy saving mode according to an embodiment of the present disclosure;
FIG. 12 is a diagram illustrating an example of a user interface in a mobile terminal according to an embodiment of the present disclosure;
FIG. 13 is a ladder diagram illustrating an energy consumption state determining procedure executed in a home network system according to an embodiment of the present disclosure;
FIG. 14 is a ladder diagram illustrating a procedure executed when a room-specific layout is changed in a home network system according to an embodiment of the present disclosure;
FIG. 15 is a ladder diagram illustrating an energy consumption fee inquiry procedure executed in a home network system according to an embodiment of the present disclosure;

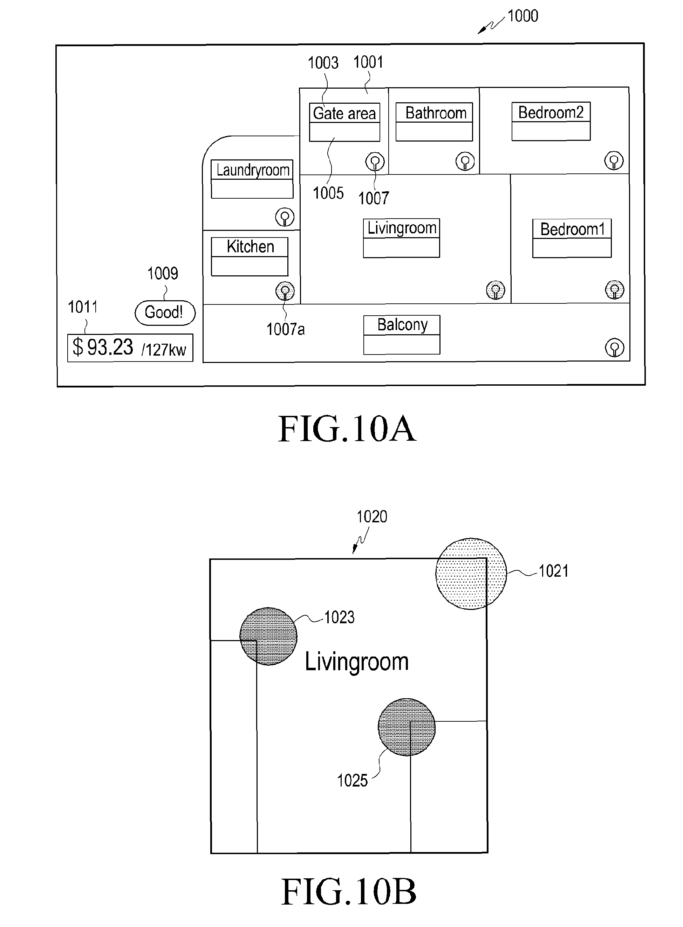

FIGs. 10a to 16c are ladder diagrams illustrating an energy saving mode procedure executed in a home network system according to an embodiment of the present disclosure;

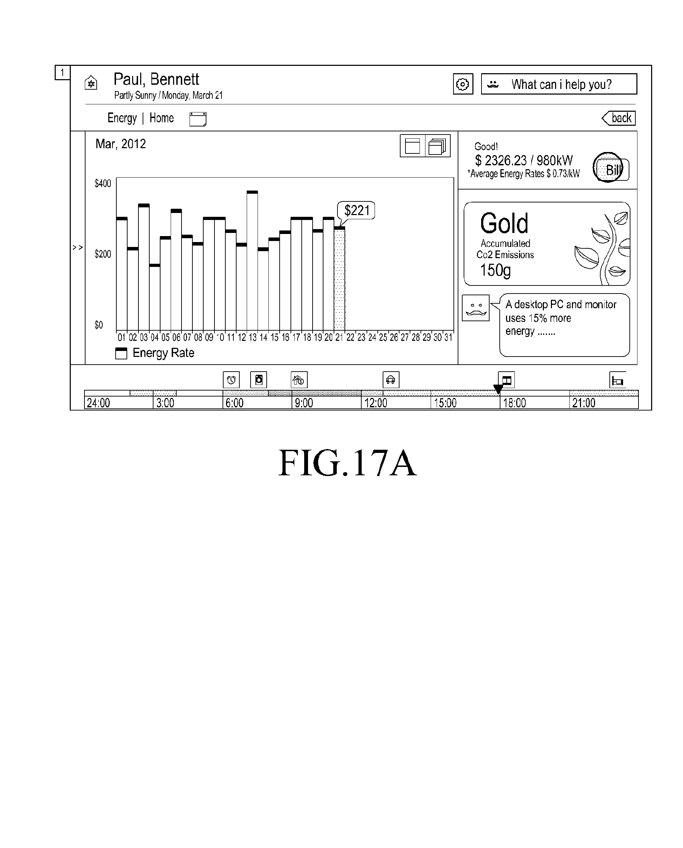

FIGs. 17a to 17c are diagrams illustrating examples of a bill layout inquired about in a user device according to an embodiment of the present disclosure; and

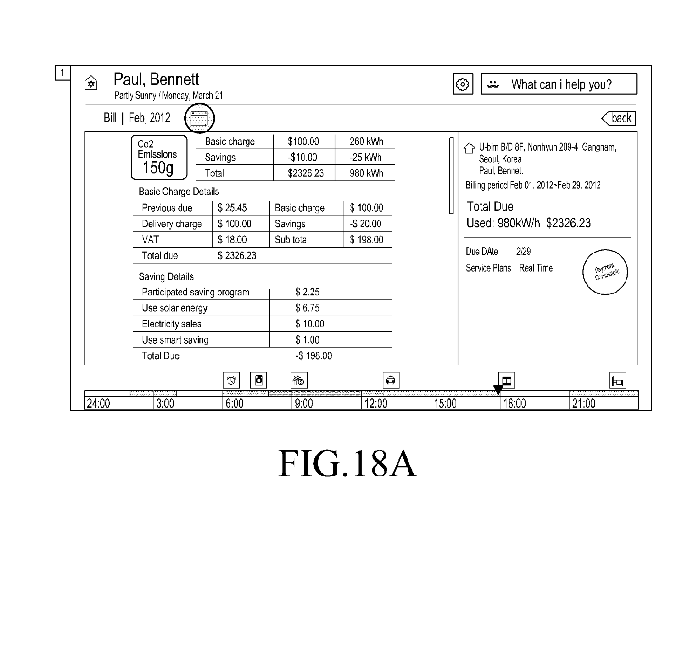

FIGs. 18a to 18d are diagrams illustrating other examples of a bill layout inquired about in a user device according to an embodiment of the present disclosure.

### [Mode for Invention]

In the following description of the present disclosure, a detailed description of known functions and configurations incorporated herein will be omitted when it may obscure the subject matter of the present disclosure. Hereinafter, various embodiments of the present disclosure will be described with reference to the accompanying drawings.

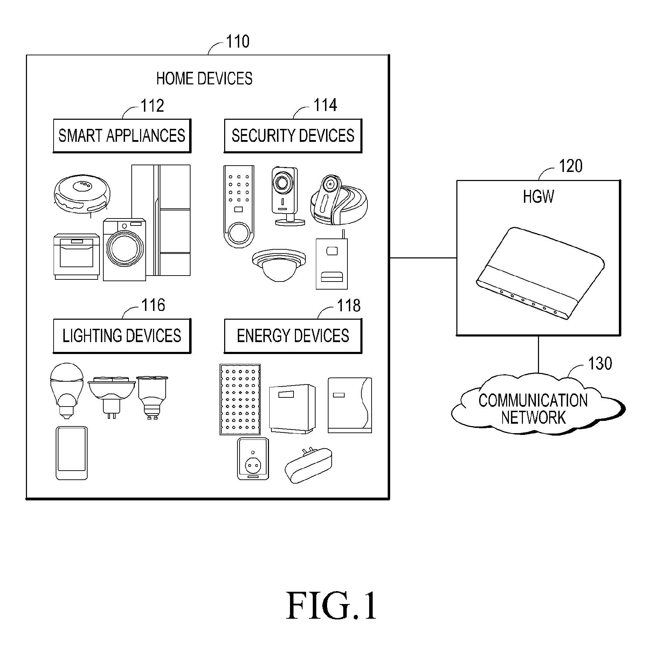

FIG. 1 is a schematic diagram illustrating a structure of a home network system according to an embodiment of the present disclosure.

Referring to FIG. 1, a home network system may include home devices 110 and a Home GateWay (HGW) 120 having control and communication functions. The home devices 110 may include smart appliances 112, security devices 114, lighting devices 116, and energy devices 118 that are located in home. For example, the smart appliances 112 may include a refrigerator, a washing machine, a robot vacuum cleaner, and the like. The security devices 114 may include a door lock system, a security camera, a security sensor, and so forth. The lighting devices 116 may include a fluorescent light, a Light Emitting Diode (LED) lighting device and the like. The energy devices 118 may include a power meter, a power socket, an electric outlet, a multi-tap, and so forth. The home devices 110 may also include a Personal Computer (PC), an Internet Protocol (IP) camera, an Internet phone, a wired/wireless phone, and a mobile phone.

The home devices 110 may communicate with the HGW 110 in a wired or wireless manner, and may receive a control command from the HGW 120 and transmit requested information to the HGW 120. The HGW 120 may include communication modules for communicating with the home devices 110 based on a wired communication or a wireless communication, a storing unit for registering and storing information of the home devices 110, and a controller for controlling operations and states of the home devices 110, collecting needed information from the home devices 110, and managing the collected information. In particular, the HGW 120 is connected with a data network such as the Internet, that is, an Internet Protocol (IP) network 130, to allow connection from another communication terminal through the IP network 130, and to transmit a control signal received from the communication terminal to a corresponding home device.

The home network system as illustrated in FIG. 1 may provide a home entertainment service, such as an Internet TV (IPTV) and a Video on Demand (VoD), which use the IP network 130, a home data communication service, such as data sharing, Voice over IP (VoIP), and video communication, and a home automation service, such as remote control and remote gauge examination of electronic appliances, crime prevention, and disaster prevention. That is, the home network system illustrated in FIG. 1 connects most of the home devices 110 used inside and outside the home through a single network to control them. Thus, in the specification, the expression "in home" may be understood as "inside/outside home".

The user may connect to the HGW 120 included in the home network system and to each home device 110 through the HGW 120, by using wireless communication equipment, such as a mobile terminal, in remote areas. For example, the mobile terminal may be a Personal Digital Assistant (PDA) having a communication function, a smartphone, a cellular phone, a tablet computer, a laptop computer, or the like, and may connect to the home network system through a common carrier network and the Internet.

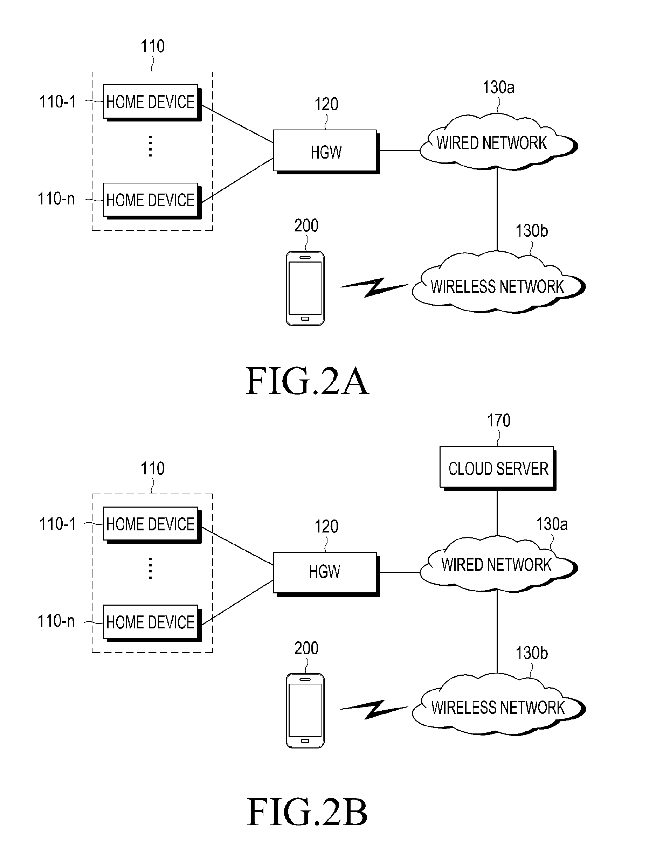

FIG. 2a is a schematic diagram illustrating a structure of a home network system connectable with a mobile terminal according to an embodiment of the present disclosure.

Referring to FIG. 2a, the home devices 110 in the home network system connects to the HGW 120 based on a wired or wireless communication. The HGW 120 connects to a wired network 130a such as the Internet. A registered mobile terminal 200 connects to a wireless network 130b including a wireless access network and a carrier core network, and accesses the HGW 220 through the wired network 130a. The wireless network 130b may comply with a 2^{nd} Generation (2G) or 3^{rd} Generation (3G) cellular communication system, the 3^{rd} Generation Partnership Project (3GPP), a 4^{th} Generation (4G) communication system, the Long-Term Evolution (LTE), and World Interoperability for Microwave Access (WiMAX), or the like.

FIG. 2b is a schematic diagram illustrating another structure of a home network system connectable with a mobile terminal according to an embodiment of the present disclosure.

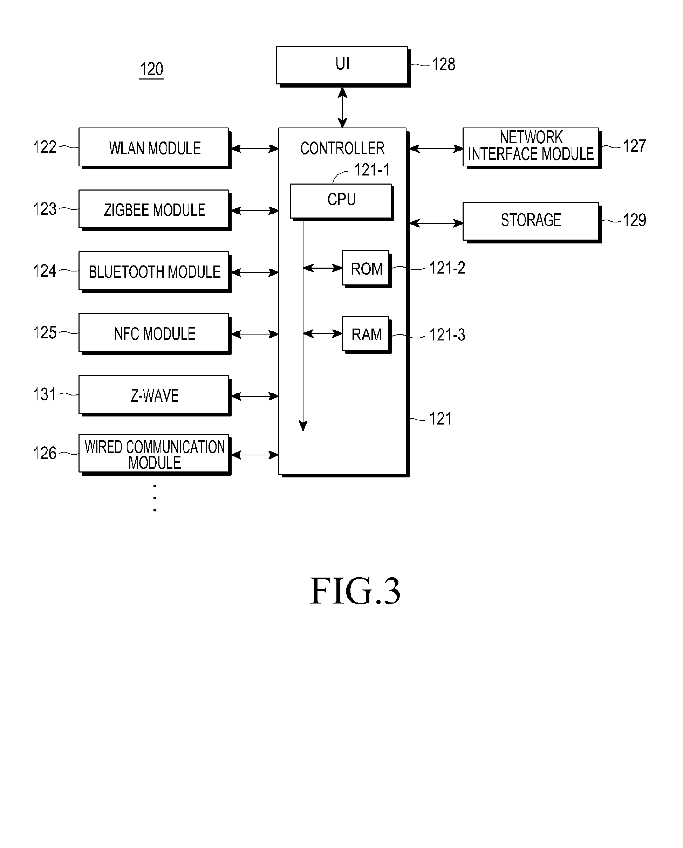

Referring to FIG. 2b, the home devices 110 in the home network system are connected to the HGW 120 based on a wired or wireless communication. The HGW 120 is connected to the wired network 130a such as the Internet. The HGW 120 communicates with a cloud server 170 through the wired network 130a. Meanwhile, the registered mobile terminal 200 connects to a wireless network 130b including a wireless access network and a carrier core network, and accesses the HGW 220 through the wired network 130a. The embodiment illustrated in FIG. 2b illustrates the structure of the system when the cloud server 170 implements the other functions than physical and electrical connections with the home devices 110 among functions of the HGW 120 (that is, an overall function of managing energy consumption of the home devices 110 in the current embodiment). In this case, the HGW 120 operates as a connection means for controlling operations of the home devices 110 through the cloud server 170. Thus, a control operation for managing energy consumption, performed by the HGW 120, may also be performed identically through the cloud server 170 in FIGs. 3 to 18.

FIG. 3 is a block diagram illustrating a structure of an HGW according to an embodiment of the present disclosure. The HGW 120 illustrated in FIG. 3 may include at least one of illustrated components.

Referring to FIG. 3, the HGW 120 is connected with multiple home devices 110-1 to 110-n by using at least one communication modules 122 to 126 and 131. The communication modules 122 to 126 and 131 include at least one of various wireless or wired communication protocol-based modules, such as a Wireless Local Area Network (WLAN) module 122 such as WiFi, a ZigBee module 123, a Bluetooth® module 124, a Near-Field Communication (NFC) module 125, a Z-WAVE module 132, and a wired communication module 126. The Z-WAVE module 122-6 adopts one of Radio Frequency (RF) techniques widely used for device control like home automation. The HGW 120 may include a controller 121, a network interface module 127, a User Interface (UI) 128, and a storage 129.

The controller 121 may include a Central Processing Unit (CPU) 121-1, a Read-Only Memory (ROM) 121-2 having stored therein a control program for controlling the HGW 120, and a Random Access Memory (RAM) 121-3 used as a memory region for a task performed in the HGW 120. The controller 121 communicates with the home devices 110-1 to 110-n through the communication modules 122 to 126 by execution of programs stored in the ROM 121-2 or the RAM 121-3 or application programs that may be stored in the storage 129, and generates a control command to send the control command to the home devices 110-1 to 110-n or stores information collected from the home devices 110-1 to 110-n in the storage 129.

The UI 128 may include an output module such as a display, a speaker, an indication lamp, or the like, and an input module (not illustrated) such as a touch screen, a keypad, a microphone, or the like. The UI 128 may be used for a user to directly control the HGW 120, register or delete the home devices 110-1 to 110-n in or from the HGW 120, or control the home devices 110-1 to 110-n through the HGW 120.

The network interface 127 may be, for example, an Internet communication module and connects the HGW 120 to an external network.

The storage 129 is configured to store program codes, data, or information needed for operations of the HGW 120 under control of the controller 121, and may also store voluminous data delivered from external devices or the home devices 110-1 to 110n when necessary.

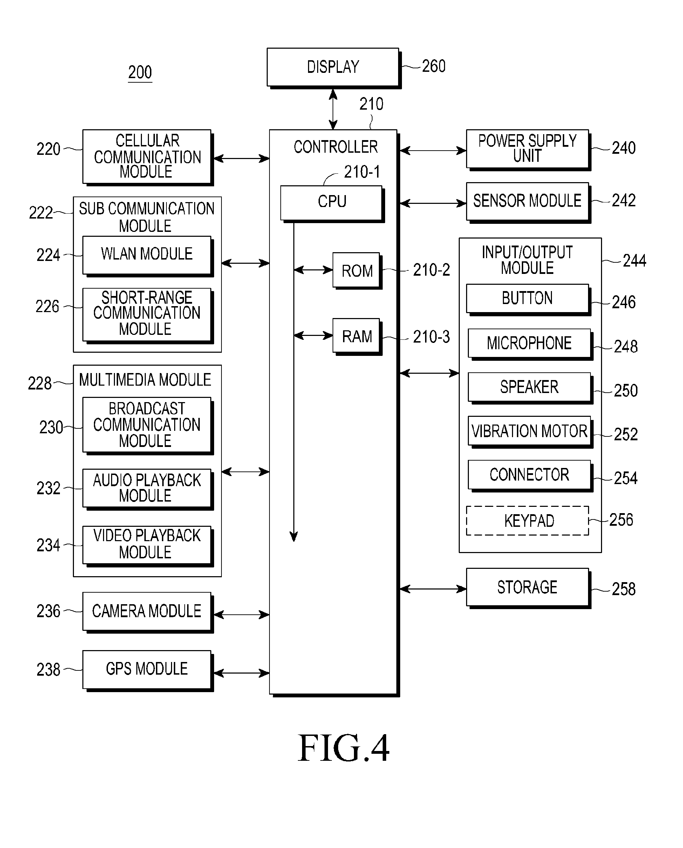

FIG. 4 is a block diagram illustrating a structure of a mobile terminal according to an embodiment of the present disclosure. The mobile terminal may include at least one of components illustrated in FIG. 4.

Referring to FIG. 4, the mobile terminal 200 may include a controller 210, a cellular mobile communication module 220, a sub communication module 222, a multimedia module 228, a camera module 236, a Global Positioning System (GPS) module 238, an input/output module 244, a sensor module 242, a storage 258, a power supply unit 240, and at least one display module 260. The camera module 236 and the GPS module 238 are selectively included. The sub communication module 130 may include at least one of a WLAN module 224 and a short-range communication module 226, and the multimedia module 228 may include at least one of a broadcast communication module 230, an audio playback module 232, and a video playback module 234. The camera module 236 may include at least one camera, and the input/output module 244 may include at least one of a button set 246, a microphone 248, a speaker 250, a vibration motor 252, a connector 254, and a keypad 256.

The controller 210 may include a CPU 210-1, a ROM 210-2 having stored therein a control program for controlling the mobile terminal 200, and a RAM 210-3 that memorizes a signal or data input from outside the mobile terminal 200 or is used as a memory region for a task performed in the mobile terminal 200, and the controller 210 controls the other components of the mobile terminal 200.

The cellular communication module 220 uses a wireless access technique based on a cellular communication protocol under control of the controller 210 to allow the mobile terminal 200 to be connected to an external device (in particular, a base station of a cellular system) via at least one or a plurality of antennas (not illustrated). The cellular communication module 220 transmits/receives a wireless signal including voice communication, video communication, a Short Messaging Service (SMS) message, or a Multimedia Messaging Service (MMS) message to/from other devices capable of performing communication. The cellular communication module 220 transmits/receives a wireless signal including short data for controlling an application or the like.

The WLAN module 224 connects to the Internet in a place where a wireless Access Point (AP, not illustrated) is installed, under control of the controller 210. The short-range communication module 226 wirelessly performs short-range communication between the mobile terminal 200 and an external device under control of the controller 210. Short-range communication may include Bluetooth®, ZigBee, Infrared Data Association (IrDA), and so forth.

The display module 260 may include a touch screen that displays information of various applications (for example, call, data transmission, broadcasting, a camera, or the like) executable by the controller 210 and provides a UI configured correspondingly. The controller 210 allows a soft key displayed on the touch screen 260 to be selected or executes an application or a function corresponding to the soft key in response to a user gesture sensed on the touch screen. The user gesture may include a touch by a finger or a tool, recognition of a motion of a human body, and so forth.

In the home network system structured as described above, a user situated outside may desire to perform a monitoring function with respect to in-home situations. In this case, the user connects to the HGW 120 by using a mobile terminal or computing device carried by the user, and controls at least one of the home devices 110-1 to 110-n registered through the HGW 120 to monitor the in-home situations.

The present disclosure proposes the following embodiments as a method for providing an energy management service in the home network system.

A first embodiment proposes a method for determining in real time an energy consumption state, that is, a power consumption state, for each home device or each room in home provided with the home network system, and providing the energy consumption state to the user. A second embodiment proposes a method for calculating an energy consumption fee based on the determined energy consumption state and providing the calculated energy consumption fee to the user. A third embodiment proposes a method for monitoring a home-device-specific power consumption or room-specific power consumption in home to provide alarm information including information about a home device or a room that over-consumes power over a predetermined threshold to the user and performing an energy saving mode in which a power consumption of the home device or the room is limited or controlled. According to another embodiment, an instantaneous power consumption added up at a particular point in time for home devices is calculated and if the calculated instantaneous power consumption is greater than a threshold, the energy saving mode may be executed.

The first through third embodiments may be performed through interworking between the home network system in home and a user's smart device (hereinafter, referred to as a "user device") such as a smart phone, a tablet PC, an IP-based wired/wireless phone, a multi-function remote controller, a smart TV, or the like.

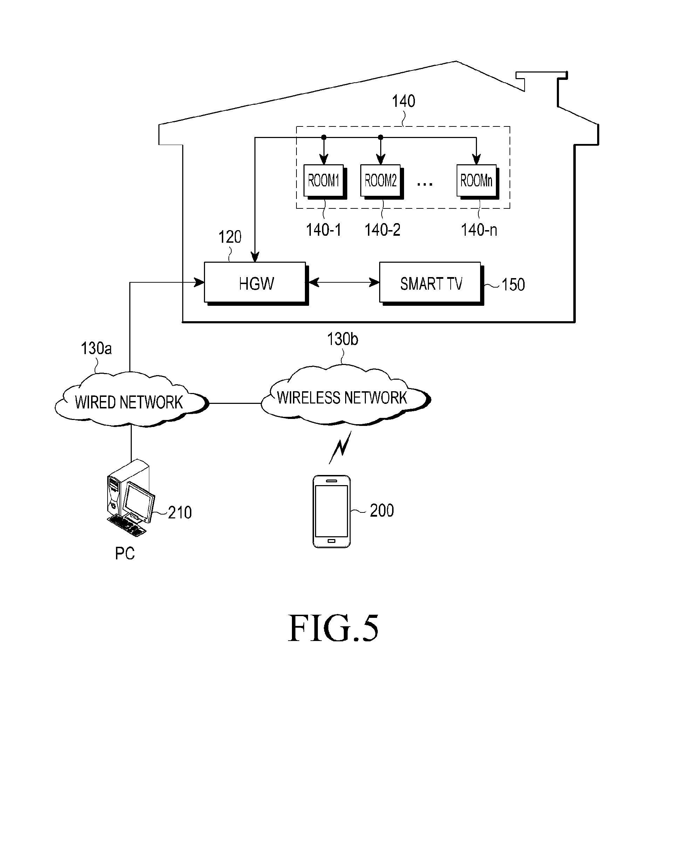

FIG. 5 is a schematic diagram illustrating a structure of a home network system that manages energy consumption according to an embodiment of the present disclosure. Like components that have already been described in FIGs. 1 and 2a will not be described in detail.

In an embodiment illustrated in FIG. 5, the HGW 120 registers information of multiple devices 140 and collects and analyzes an energy consumption, that is, a power consumption of the home devices 140. Locations of the multiple home devices 140 are registered on an in-home room basis. In FIG. 5, reference numerals 140-1 through 140-n denote at least one home device corresponding to indicated rooms. The multiple home devices 140 correspond to the home devices 110 of FIG. 1.

The HGW 120 communicates with a user device such as a smart phone, a tablet PC, or a smart TV to provide power consumption information of the home devices 140 to the user device. In the following embodiment of the present disclosure, suppose that a smart TV 150 is used as the user device for convenience' sake.

The multiple home devices 140 measures a power consumption having accumulated from a predetermined point in time to a current point in time at predetermined intervals or upon receipt of a power consumption measurement request from the HGW 120. The multiple home devices 140 may also measure an instantaneous power consumption at a particular point in time. The measurement result may be transmitted from each home device 140 to the HGW 120 by using a communication means, for example, Power Line Communications (PLC), WiFi, ZigBee, or the like. The multiple home devices 140 may store rated power information in the form of, for example, meta data.

The HGW 120 variably sets an interval of collecting measurement results transmitted from the home devices 140. For example, if a power consumption exceeds a predetermined threshold or if a predetermined number of home devices 140 are in operation, the HGW 120 may increase the collecting interval, whereas if a power consumption is lower than the predetermined threshold or if a smaller number of home devices 140 than the predetermined number are in operation, the HGW 120 may reduce the collecting interval.

The HGW 120 stores floor plan information showing an in-home room-specific location, and registers and manages the locations of the home devices 140 on a room basis. Herein, the floor plan information may be provided from a server (not shown) of an operator establishing the home network system to the HGW 120 or may be directly input by the user to the HGW 120 using a PC 201. The floor plan information may be provided to include selectable various designs of floor plans if a user's home address is input through a portable site provided by the operator. In this case, the user may select a floor plan design depending on user's taste.

The user-desired floor plan design may be selected using the portable site or through the smart TV 150 connected with the HGW 120.

The current location of each home device 140 may be directly registered in the

HGW 120 or may be detected using an RF tag, sensor, or the like provided in each home device 140. The location information of each home devices 140 is mapped to a name of a room where the home device 140 is placed, for example, a kitchen for a refrigerator, a living room for a TV, or the like. The location information may have a location in which each home device 140 is generally installed, as a default value. By using a UI on a floor plan provided on the smart TV 150, the user may also drag and drop an icon of each home device 140 from one room to another room or change a location of the home device 140 on the floor plan using a gesture like a touch or a voice command.

The smart TV 150 may receive room-specific location information of the home devices 140 and the floor plan information from the HGW 120 and provide a UI that visually displays an in-home power consumption state, a room-specific power consumption state, or a home-device-specific power consumption state of the home devices 140 on the in-home floor plan. The power consumption state may be analyzed on a designated-period basis and provided.

The HGW 120 calculates a total power consumption and a room-specific power consumption based on the measurement results periodically collected from the home devices 140 and the room-specific location information of the home devices 140. Each of the total power consumption and the room-specific power consumption may be calculated by addition for a predetermined period or may be calculated as an average power consumption by averaging for a predetermined period. A result of comparing a power consumption of this month with a power consumption of last month or with an average power consumption may also be calculated.

If a power price changes in real time, the HGW 120 receives power unit-price information through an external server to calculate an accurate power consumption fee. If a progressive tax rate is input, the power consumption fee may be calculated using the input progressive tax rate.

The HGW 120 calculates a consumption fee based on the power consumption of the home devices 140 and the power unit-price information to provide consumption fee information. Herein, the consumption fee information may be specifically provided as a room-specific consumption fee or a home-device-specific consumption fee, and the consumption fee information may be transmitted through power consumption information transmitted to the user device. The HGW 120, upon receiving a consumption fee information request from the smart TV 150, transmits calculated consumption fee information to the smart TV 150. Upon receiving the consumption fee information, the smart TV 150 configures, for example, a bill layout, and displays a consumption fee in the configured bill layout.

In the home network system illustrated in FIG. 5, the HGW 120 registers information of the home devices 140 installed in home, and controls and manages the registered home devices 140. For example, if a new home device is installed, the HGW 120 collects and stores information about the new home device, for example, an identifier, capacity information, and state information of the home device. The information about the home device may be obtained directly from the home device through a service discovery procedure between the HGW 120 and the home device, may be received by the HGW 120 from a server on the Internet based on identification information provided from the home device, or may be directly input to the HGW 120 by the user or a system administrator. If the user purchases and installs the new home device, and inputs identification information, for example, a serial number, a model number, or a Quick Response (QR) code, provided from the home device or a manual thereof into the HGW 120, then the HGW 120 may connect to a manufacturer server on the Internet based on the identification information of the home device and obtain the information about the home device.

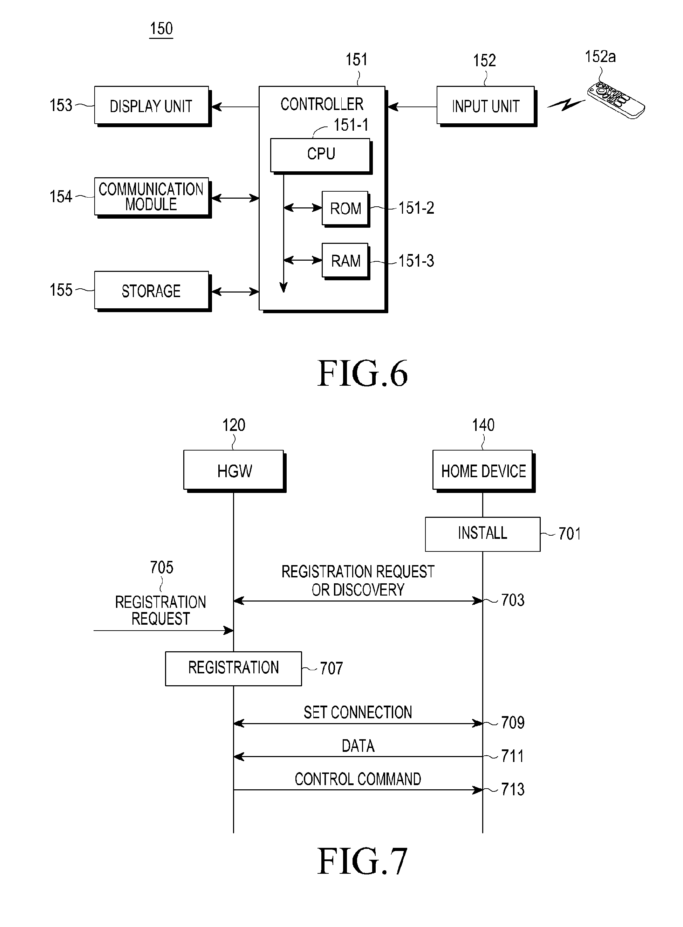

FIG. 6 is a block diagram illustrating an example of a structure of a user device according to an embodiment of the present disclosure, in which the user device may be various smart devices such as a smart phone, a tablet PC, an IP-based wired/wireless phone, a multi-function remote controller, a smart TV, or the like. Although a smart TV is used as an example of the user device for convenience' sake, the structure illustrated in FIG. 6 may be equally applied to other smart devices.

Referring to FIG. 6, a controller 151 may include a CPU 151, a ROM 151-1 having stored therein a control program for operations and control of the user device, and a RAM 151-2 that stores various temporary data generated by operations and control of the user device. If the user device is a smart TV, the control program may be a control program for driving and controlling the smart TV. The control program may include an energy management application (or widget) for energy management of the home devices 140. The energy management application (or widget) may be stored in a storage 155 rather than in the ROM 151-1 to facilitate update.

The storage 155 stores various applications, contents, and data for use by the user device and information provided from the HGW 120 due to energy management.

In FIG. 6, an input unit 152 may be various input means such as a keypad, a touch pad, or a voice recognition apparatus for various key inputs for controlling unique operations of the user device and a key input for energy management according to an embodiment of the present disclosure. A display unit 153 displays an operating screen of the user device, and if the energy management application is executed, the display unit 153 displays a UI provided due to energy management and energy consumption states of the home devices 140.

In FIG. 6, the communication module 154 includes at least one of a WLAN module, a ZigBee module, a Bluetooth® module, an NFC module, a wired communication module, and a cellular communication module, and by using the communication module 154, the user device transmits and receives a wireless signal including various control signals for energy management to and from the HGW 120 and/or an external device.

In an embodiment illustrated in FIG. 6, if there is a user key input for energy management through the input unit 152 or a remote controller 152a, the controller 151 executes the energy management application, receives in-home floor plan information, power consumption information and room-specific location information of the home devices 140, which are provided from the HGW 120 through the communication module 154, and displays the energy consumption states of the home devices 140 on the in-home floor plan. The remote controller 152a may be selectively provided.

The controller 151 controls calculating and displaying total, room-specific, and period-specific consumption fees calculated by the HGW 120 or the controller 151. The consumption fee is calculated based on the power consumption information and the power unit-price information, and the power unit-price information may be set by default, may be input from the user, or may be provided in real time through an external server. The controller 151 provides a UI to modify the in-home floor plan according to user's needs (for example, removing a wall between rooms or increasing the size of a room).

FIG. 7 is a ladder diagram illustrating a procedure for registering a home device according to an embodiment of the present disclosure.

Referring to FIG. 7, in step 701, the home device 140 is installed and an operating power is supplied. The user determines to register the already installed home device 140 in the HGW 120. In step 703, the HGW 120 performs a discovery procedure for the home device 140. For example, if the home device 140 is connected to the HGW 120 through WiFi, the HGW 120 performs a discovery procedure for a neighboring new home device periodically or at the request of the user. If the home device 140 is discovered through the discovery procedure, the HGW 120 receives home device information from the home device 140. The home device information may include at least one of identification information and capacity information, such as a rated power, of the home device 140. In a selectable embodiment, the identifier may include a product code indicating a product type (an air conditioner, a refrigerator, a Light Emitting Diode (LED) lamp, or the like) of the home device 140.

In a selectable embodiment, in step 705, the HGW 120 receives a registration request for the home device 140 to be registered from the user through a UI of the HGW 120, a control console connected by an external interface, or a computer on the Internet, and receives information about the home device 140 from the user. In another embodiment, the HGW 120 obtains identification information of the home device 140 from the home device 140 or the user, and connects to a manufacturer server of the home device 140 based on the identification information to obtain capacity information of the home device 140.

In step 707, the HGW 120 stores the information about the home device 140 and manages the home device 140 as the registered home device 140. In a selectable embodiment, the HGW 20 may receive additional information about the home device 140 from the user or from a remote terminal through the Internet or WiFi. The additional information may include at least one of, for example, a name or nickname of the home device 140 and a location where the home device 140 is installed.

In a selectable embodiment, the HGW 120 may receive additional information about an operation mode and/or an authority of the home device 140 directly from the user, or from the remote terminal through the Internet or WiFi. The additional information may include, for example, a level of an access authority for the home device 140. The level of the access authority may include, for example, permission for an access through the HGW 120, permission for an access by a registered remote terminal, or permission for an access to the HGW 120 by a registered remote terminal.

In step 709, the HGW 120 sets connection with the home device 140. Setting the connection is performed in a procedure determined based on WiFi, ZigBee, Bluetooth®, NFC, or a wired communication, depending on a communication method between the HGW 120 and the home device 140. Once connection is set between the HGW 120 and the home device 140, the home device 140 transmits data to the HGW 120 through the set connection in step 711. In an embodiment, the home device 140 transmits a result of measuring a power consumption periodically or at the request of the HGW 120.

In step 713, the HGW 20 sends a control command to the home device 140. For example, the HGW 120 sends a control command for reducing a power consumption of the home device 140 to the home device 140 in an energy saving mode according to an embodiment of the present disclosure. For example, if the home device 140 is an air conditioner, the HGW 120 may send a control command for setting/limiting an operating time or raising a set temperature or a control command for lowering a fan speed. A reduction of a power consumption may be set stepwise.

In a selectable embodiment, the control command corresponding to the energy saving mode may be set to be suitable for characteristics of each product, taking a product type of the home device 140 into account. The control command may set a current operating condition to be maintained or a power consumption to be increased. The control command may be set in common to the multiple home devices 140, or different control commands may be set for the multiple home devices 140. The control command corresponding to the energy saving mode is transmitted to the HGW 120 from the user device through a user's key input or touch input like a gesture or a user's voice command, and the HGW 120 transmits the received control command to the home device 140. In a selectable embodiment, even when any control command is not input through the user device, if a power consumption exceeds a predetermined threshold, the HGW 120 collectively controls a power consumption of each of the multiple home devices 140 or controls a power consumption of each of previously selected home devices 140.

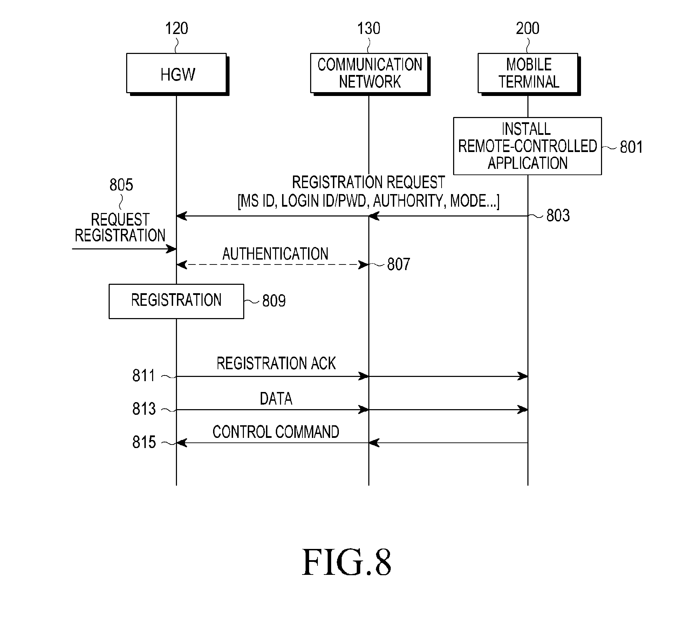

FIG. 8 is a ladder diagram illustrating a procedure for registering a mobile terminal according to an embodiment of the present disclosure.

Referring to FIG. 8, in step 801, the mobile terminal 200 installs an energy management application that supports remote control of the HGW 120. In a selectable embodiment, the energy management application may be installed only in the mobile terminal 200 of the user having passed through a predetermined authentication procedure. In an embodiment, the HGW 120 provides an authentication number, and the HGW 120, a manufacturer's server that manages the HGW 120, or an external server that provides the energy management application permits downloading of the energy management application only by the mobile terminal 200 of the user inputting the authentication number.

In a selectable embodiment, the energy management application may provide a limited function according to a permitted authority level of the mobile terminal 200. For example, the energy management application may selectively provide at least one of information inquiry through the HGW 120, reception of alarm information from the HGW 120, and partial or entire control of the home devices 140, depending on the permitted authority level. The permitted authority level may be set through the HGW 120, the manufacturer server that manages the HGW 120, or the external server that provides the energy management application.

In step 803, the mobile terminal 200 executes the energy management application and sends a registration request message to the HGW 120 through the energy management application. The energy management application may be delivered to the HGW 120 through the Internet, or to the HGW 120 through WiFi. The registration request message may include at least one of an identifier of the mobile terminal 200 (for example, an MS Identifier (MSID) or an International Mobile Subscriber Identify (IMSI)), login ID and password, authority information, and operation mode information.

In a selectable embodiment, in step 805, the HGW 120 receives the registration request for the mobile terminal 200 to be registered from the user through the UI of the HGW 120, a control console connected by an external interface, or a computer on the Internet, and receives information about the mobile terminal 200, for example, authority information and/or operation mode information, from the user.

In a selectable embodiment, in step 809, the HGW 120 connects to a server that manages subscriber information of a mobile communication system based on the identification information obtained from the mobile terminal 200 or the identification information of the mobile terminal 200 obtained from the user to authenticate the mobile terminal 200. If the authority information of the mobile terminal 200 is not input to the HGW 120, the HGW 120 may generate the authority information of the mobile terminal 200 based on a result of the authentication.

In step 811, the HGW 120 stores the information about the mobile terminal 200 and manages the mobile terminal 200 as the registered mobile terminal 200. In step 813, the HGW 120 sends a registration acknowledgement message indicating that the information about the mobile terminal 200 has been successfully registered to the mobile terminal 200. In step 813, the HGW 120 may also transmit data needed for remote control of the HGW 120 to the mobile terminal 200. Herein, the needed data may include information indicating an energy consumption state, such as a home-device-specific power consumption, a room-specific power consumption, and a total power consumption.

In step 815, the user of the mobile terminal 200 having received the information indicating the energy consumption state may send a control command for reducing, increasing or maintaining a power consumption of the home device 140 in the energy saving mode according to an embodiment of the present disclosure to the HGW 120 by using a UI provided through the energy management application. Herein, a reduction/an increase of the power consumption may be set stepwise. The control command corresponding to the energy saving mode is sent to the HGW 120 from the mobile terminal 200 illustrated in FIG. 4 through a user's key input or touch input such as a gesture or a user's voice command, and the HGW 120 delivers the received control command to the home device 140.

In a selectable embodiment, if a power consumption exceeds a predetermined threshold without input of the control command through the mobile terminal 200, the HGW 120 transmits alarm information to the mobile terminal 200, and collectively controls power consumptions of the multiple home devices 140 or controls power consumptions of previously selected home devices 140 according to the control command sent from the mobile terminal 200 in response to the alarm information.

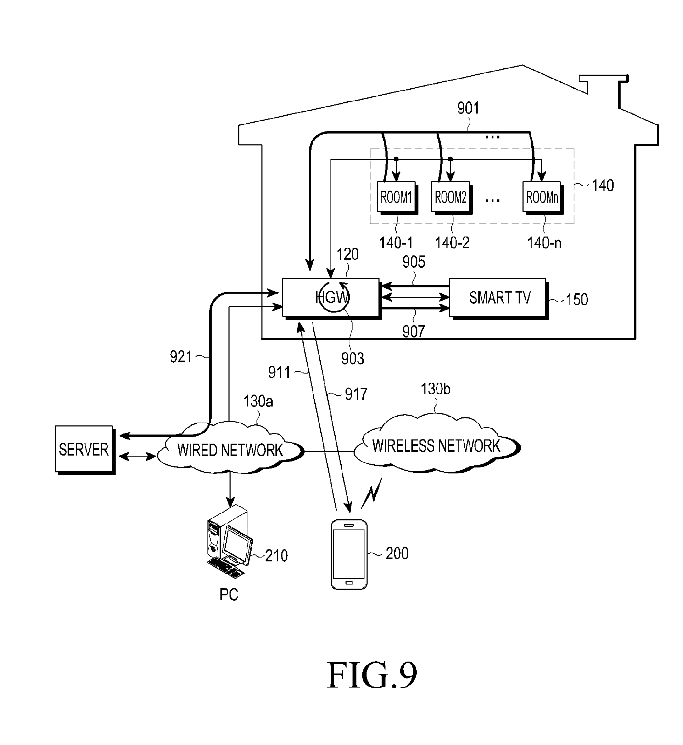

FIG. 9 is a diagram illustrating an energy consumption state determining procedure executed in a home network system according to an embodiment of the present disclosure. In an embodiment illustrated in FIG. 9, suppose that the smart TV 150 and the mobile terminal 200 are used as user devices.

Referring to FIG. 9, in step 901, the HGW 120 receives power consumption measurement results from the respective home devices 140 located in home periodically or in response to measurement requests. The HGW 120 having received the power consumption measurement results collects and analyzes the measurement results for the home devices 140 to generate power consumption information of the home devices 140. The power consumption information may be updated every reception of a measurement result, at predetermined intervals, or at the request of the user through the smart TV 150. The power consumption information may be calculated, for example, on a room basis, a home-device basis, or period basis.

In step 905, the user who desires to check the energy consumption states of the home devices 140 in real time executes an energy management application installed in the smart TV 150. Once the energy management application is executed and a monitoring function for determining the energy consumption state is executed on the smart TV 150, the smart TV 140 requests the HGW 120 to transmit power consumption information of the home devices 140. The energy management application may also be executed by the user manipulating the remote controller 150a of the smart TV 150.

In step 907, the HGW 120 transmits the generated power consumption information to the smart TV 150 as energy consumption information. Herein, the power consumption information of the home devices 140 may include at least one of total power consumption information, room-specific power consumption information, device-specific power consumption information, and period-specific power consumption information.

In another embodiment, the user may selectively designate and be provided with desired power consumption information out of the power consumption information through the energy management application. While it has been described in the embodiment illustrated in FIG. 9 that the HGW 120 periodically generates the power consumption information of the home devices 140 without a transmission request of the power consumption information from the smart TV 150, it may also be possible for the HGW 120 to periodically collect a measurement result of each home device 140 and generate power consumption information using the collected measurement result if a power consumption information transmission request is input from the user through the smart TV 150.

In step 907, the smart TV 150 having received the power consumption information displays a screen 1000 indicating a room-specific power consumption and a total power consumption on a floor plan indicating an in-home room-specific location as illustrated in FIG. 10a. Referring to FIG. 10a, on the floor plan, for a gate area 1001, an area's (or room's) name 1003 and a power consumption 1005 of the gate area 1001 calculated in real time are displayed, and for the other areas (for example, a bathroom, a bed room, a living room, a kitchen, and the like), an area(room)-specific power consumption is displayed in the same manner. In each area (room), an alarm indication 1007 indicating whether a power consumption of an area (room) exceeds a threshold is displayed. If the power consumption of the area (room) exceeds the threshold, a shaded alarm indication 1007a is displayed such that the user may know in which area (room) a power consumption is high. In addition, according to whether a total power consumption obtained by adding up a room-specific power consumption as in an example illustrated in FIG. 10a exceeds a predetermined threshold, an energy consumption level 1009 indicating a level of a total power consumption and a total power consumption/consumption fee 1011 may be displayed in real time.

In a selectable embodiment, in step 921, the HGW 120 receives real-time power unit-price information through a server of an operator who provides electricity or a server of an operator who provides a home network system to accurately calculate a consumption fee that varies in real time.

Once the user selects (or clicks) a particular area (room) to check in detail a power consumption of the area (room) on the floor plan illustrated in FIG. 10a, current power consumption states of home devices 1021, 1023, and 1025 located in a corresponding area (room) 1020 are displayed in different colors as illustrated in FIG. 10b. For example, in FIG. 10b, the home devices 1023 and 1025 displayed in dark colors have high power consumptions and the home device 1021 displayed in a light color has a low power consumption. On the screen illustrated in FIG. 10b, if the user selects (or clicks) each of the home devices 1021, 1023, and 1025, the user may check in more detail a home-device-specific power consumption.

In another embodiment, if the energy saving mode is set in the HGW 120, the energy management application may be automatically executed in the smart TV 150 having received alarm information indicating that power consumptions of the home devices 140 exceed a predetermined threshold from the HGW 120 if the power consumptions of the home devices 140 exceed the predetermined threshold.

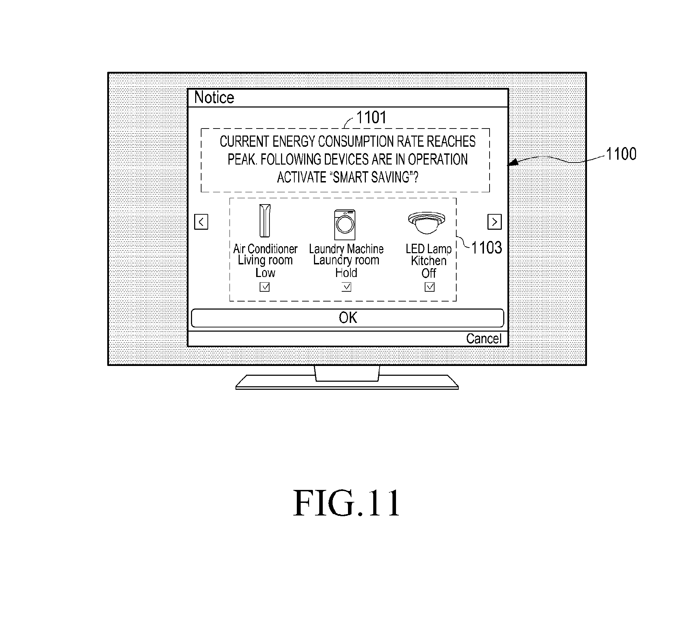

In this case, as illustrated in FIG. 11, on the screen illustrated in the smart TV 150, a popup window 1100 displaying the alarm information may be output and a guide window 1101 may display that an energy consumption rate exceeds a predetermined value. The user may selectively control operations of multiple or corresponding home devices 140 by using a UI screen 1103 provided through the popup window 1100.

A control command input from the user through the UI screen 1103 is sent to the HGW 120 and the HGW 120 controls operations of corresponding home devices 140 in response to the control command, for example, as in the embodiment illustrated in FIG. 7.

[Table 1] illustrates an example of detailed operation modes of the energy saving mode according to an embodiment of the present disclosure.

**[Table 1]**

| | | |
|---|---|---|
| Saving Mode | Auto Mode | Collectively control energy consumption of all home devices in home |
| | Room-Specific Auto Mode | Control a user-selected room |
| | Device-Specific Saving Mode | Control each user-selected home device |
| | Artificial Intelligence Mode | Comprehensively determine and artificial-intelligently and collectively control temperature, luminous intensity, humidity, and presence and absence in a room |
| Saving Scheme | Switch Off | (ex) Turn off the light in a room where there is no person, switch off a home device having a power consumption exceeding a threshold, and switch off a user-selected home device |
| | Reduce Consumption | (ex) Raise a set temperature of an air conditioner, lower a set temperature of an electric heater, and adjust the brightness of the light |
| | Maintain Consumption | (ex) Intensively use a washing machine late at night, and perform intensive cooling of a refrigerator late at night |

In the foregoing example, energy consumption states of the home devices 140 are determined using the smart TV 150 and the energy saving mode is executed. However, through communication with the HGW 120 using the mobile terminal 200 as in operations 911 and 917 of FIG. 9, energy consumption state determination and energy saving mode execution may also be possible as in the smart TV 150. In this case, the mobile terminal 200 may use the mobile terminal 200 that has passed through the authentication procedure defined as in the embodiment illustrated in FIG. 8.

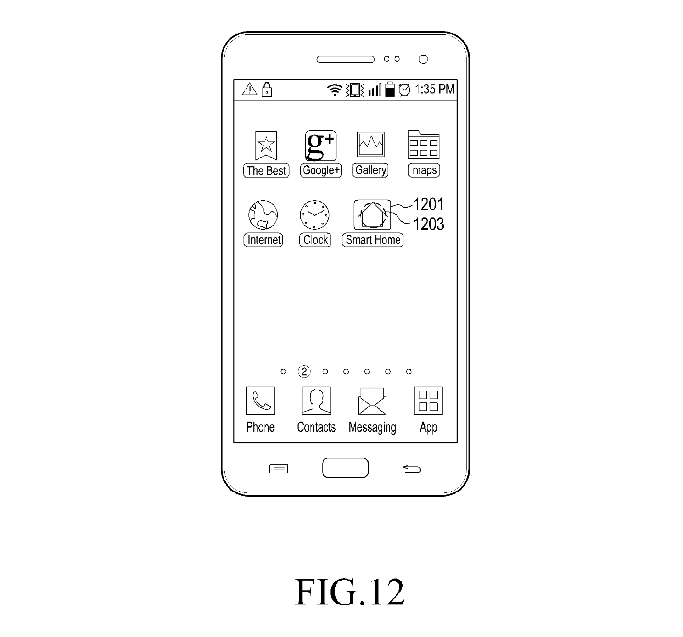

FIG. 12 is a diagram illustrating an example of a UI in a mobile terminal according to an embodiment of the present disclosure.

Referring to FIG. 12, the mobile terminal provides an icon 1201 for executing the energy management application installed therein, and executes the energy management application upon sensing a user gesture 1203, for example, a touch, on the icon 1201. In another embodiment, the mobile terminal may provide an icon for input of a voice command, and upon sensing a user gesture on the icon and receiving the voice command, for example, "Determine an energy consumption state" or "Execute an energy saving mode", then the mobile terminal may execute the energy management application to perform a corresponding function.

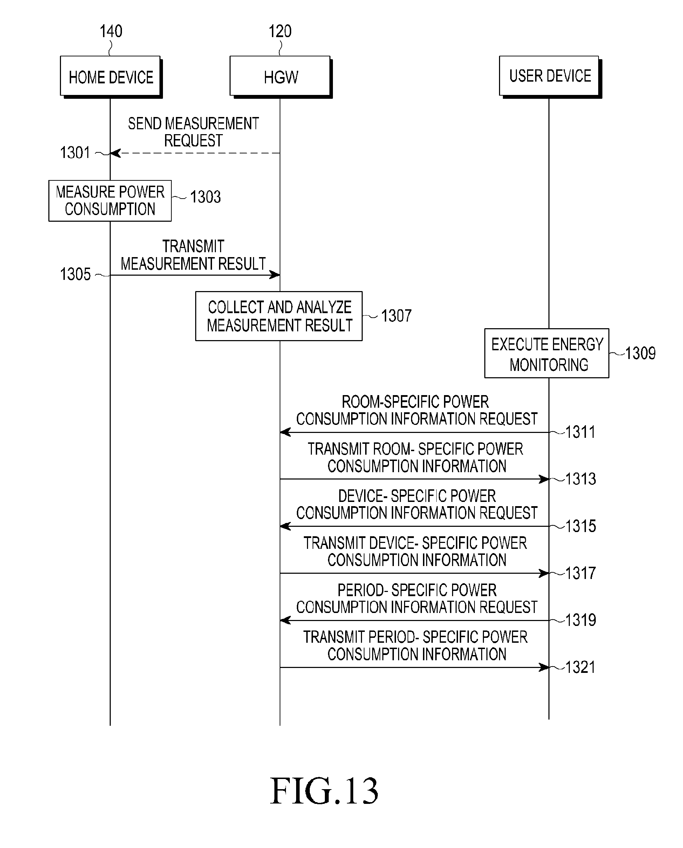

Hereinafter, an energy consumption management procedure according to an embodiment of the present disclosure will be described with reference to FIGs. 13 through 16. While one home device 140 is illustrated for convenience' sake in FIGs. 13 through 16, in practice, multiple home devices 140 are connected with the HGW 120.

FIG. 13 is a ladder diagram illustrating an energy consumption state determining procedure executed in a home network system according to an embodiment of the present disclosure.

In step 1301 illustrated in FIG. 13, the HGW 120 sends a power consumption measurement request to the home device 140. In step 1303, the home device 140 having received the power consumption measurement request measures a power consumption having accumulated from a predetermined point in time to a current point in time. In step 1305, the home device 140 transmits a result of the measurement to the HGW 120. Step 1301 may be omitted. In this case, the home device 140 measures a power consumption at predetermined intervals. In step 1307, the HGW 1307 collects a result of measuring the power consumption received from each of the multiple home devices 140 and analyzes the collected measurement results of the home devices 140 to calculate a total power consumption, a room-specific power consumption, and a device-specific power consumption. Each of the total power consumption, the room-specific power consumption, and the device-specific power consumption may be calculated by addition for a predetermined period, or may be calculated as an average power consumption by averaging for a predetermined period. A result of comparing a power consumption of this month with a power consumption of last month or with an average power consumption may also be calculated.

In step 1309, an energy management application of a user device is executed by a user's key manipulation, gesture, or voice command, and upon execution of a monitoring function for energy consumption state determination, the energy management application outputs a UI screen (not illustrated) for selecting power consumption information the user desires to know through a display unit of the user device.

Then, in steps 1311 through 1321, based on the user-selected power consumption information, a room-specific power consumption information request, a device-specific power consumption information request, or a period-specific power consumption information request is sent from the user device to the HGW 120, the HGW 120 transmits room-specific power consumption information, device-specific power consumption information, or period-specific power consumption information to the user device in response to the request, and the user device outputs the received power consumption information on the screen, for example, as illustrated in FIGs. 10a and 10b.

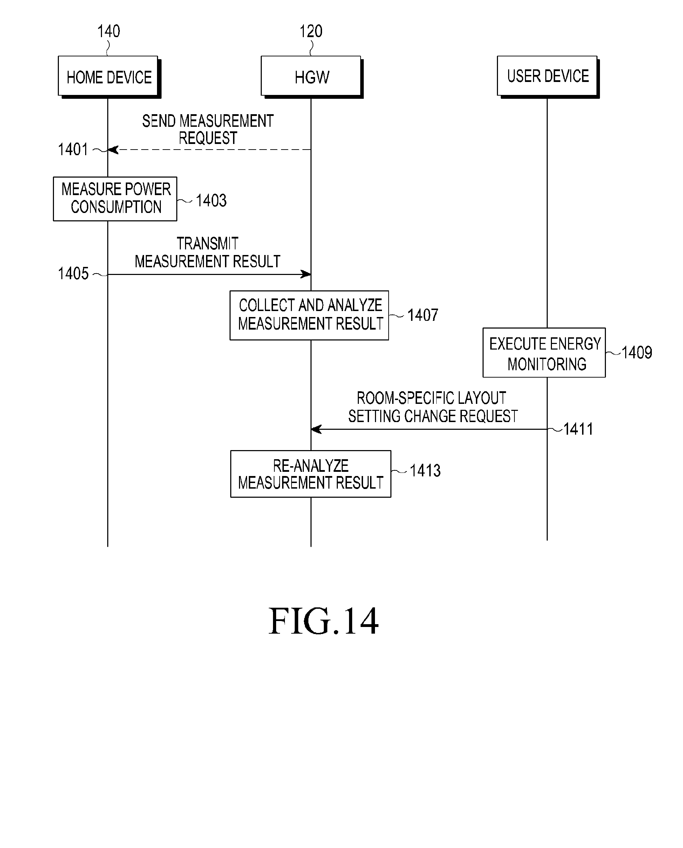

FIG. 14 is a ladder diagram illustrating a procedure executed when a room-specific layout is changed in a home network system according to an embodiment of the present disclosure.

In FIG. 14, operations in steps 1401 through 1407 of FIG. 14 are identical to those in steps 1301 through 1307 of FIG. 13, and thus will not be described in detail.

In step 1409, the energy management application of the user device is executed by the user's key manipulation, gesture, or voice command, and if a room-specific layout setting change occurs to change arrangement of the home devices 140 on a room basis, the user device sends a room-specific layout setting change request including the changed room-specific layout information to the HGW 120. The room-specific layout setting change may be made by input through the user device or auto location-change recognition of the home devices 140. Then, in step 1413, the HGW 120 re-analyzes and generates the room-specific power consumption information based on the changed room-specific layout information. The re-analyzed room-specific power consumption information is provided to the user device according to the procedure illustrated in FIG. 13.

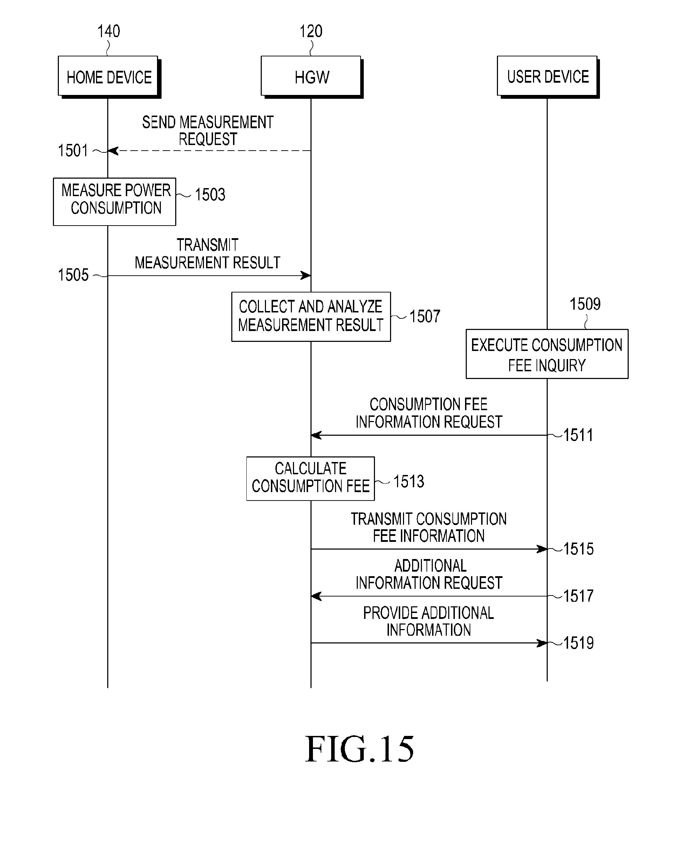

FIG. 15 is a ladder diagram illustrating an energy consumption fee inquiry procedure executed in a home network system according to an embodiment of the present disclosure.

Operations in steps 1501 through 1507 of FIG. 15 are identical to those in steps 1301 through 1307 of FIG. 13 and thus will not be described in detail.

In step 1509, the energy management application of the user device is executed by the user's key manipulation, gesture, or voice command, and if a consumption fee inquiry command is executed, the user device requests the HGW 120 to transmit consumption fee information to the HGW 120 in step 1511. In step 1513, the HGW 120 calculates a consumption fee based on power consumptions of the home devices 140 and power unit-price information, and in step 1515, the HGW 120 transmits the calculated consumption fee information to the user device. The HGW 120 receives real-time power unit-price information through the external server to accurately calculate a real-time changing consumption fee, and the consumption fee information may be provided separately as, for example, a total consumption fee, a room-specific consumption fee, and a device-specific consumption fee.

In step 1517, if an additional information request command is executed in the energy management application, the user device requests additional information from the HGW 120, and in step 1519, the HGW 120 transmits the requested additional information to the user device. The additional information may include at least one of know-how information for energy saving, recommendation information for home appliances having high energy ratings, and event information associated with energy saving. Herein, the recommendation information for the high-energy-rating home appliances may be provided in the form of comparing power consumptions of the home devices 140 in use with power consumptions of the recommended home appliances.

In another embodiment, in step 1515, the user device configures the consumption fee information as a bill layout and displays the consumption fee in the configured bill layout. The bill layout may be configured in a form as illustrated in [Table 2].

**[Table 2]**

| Configure bill data | Display information | Percentage (%) of device-specific consumption with respect to total consumption, month-specific accumulated consumption |
|---|---|---|
| Generate statistics | Statistics X-axis item | Power consumption, consumption fee |
| | Statistics Y-axis item | On a month basis, on a device basis, on a time zone basis, on a day basis, or the like |
| | UI layout | Display statistics on a month basis or on a device basis using histogram, a line graph, and so forth |
| | Class | Statistics in the same apartment complex, statistics in the same region |

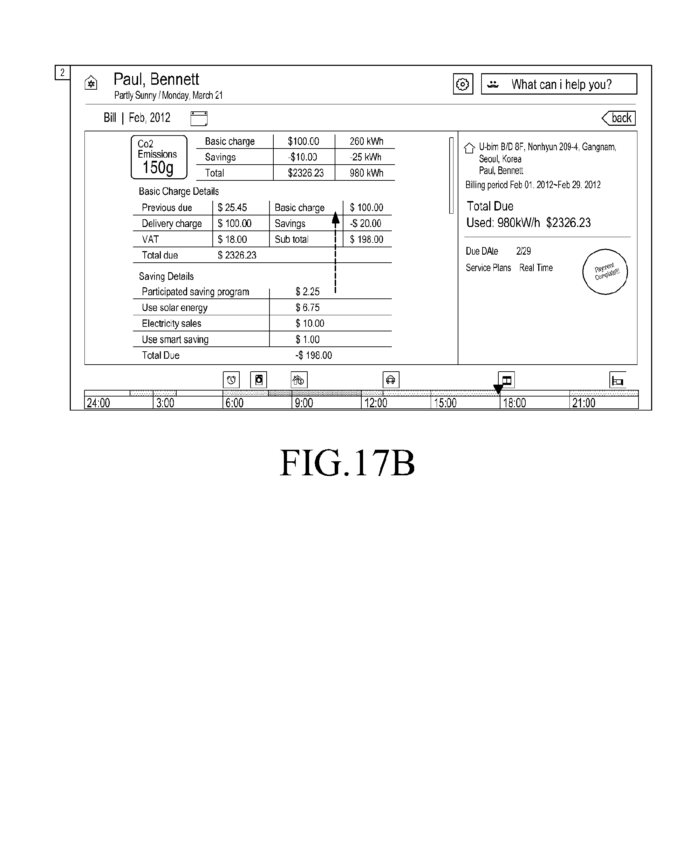

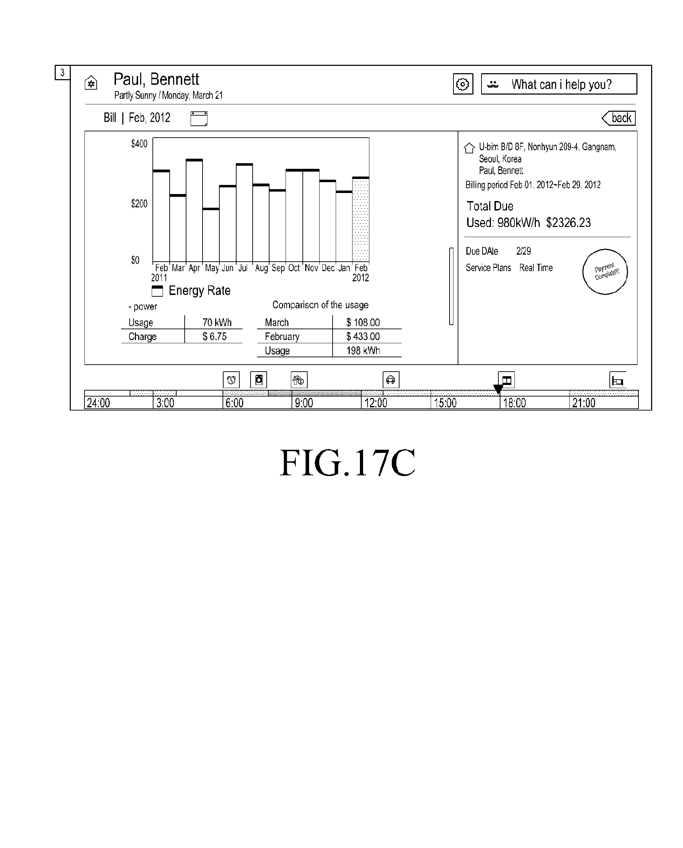

FIGs. 17a to 17c are diagrams illustrating examples of a bill layout inquired about in a user device according to an embodiment of the present disclosure. FIG. 17a illustrates an example of a bill screen that displays a power consumption on a date basis and on a time basis of a particular month and displays corresponding consumption fee information. FIG. 17b illustrates an example of a bill screen that displays a power consumption and a consumption fee of a particular month and savings in the month obtained by the energy saving mode according to an embodiment of the present disclosure, a power discount, or use of renewable energy. FIG. 17c illustrates an example of a bill screen that displays and compares month-specific consumption fees.

FIGs. 18a to 18d illustrate another example of a bill layout that may be inquired about in the user device, showing an example of a screen in which the user inquiring about a bill of a particular month in a particular year inquires about a bill of another month in another year.

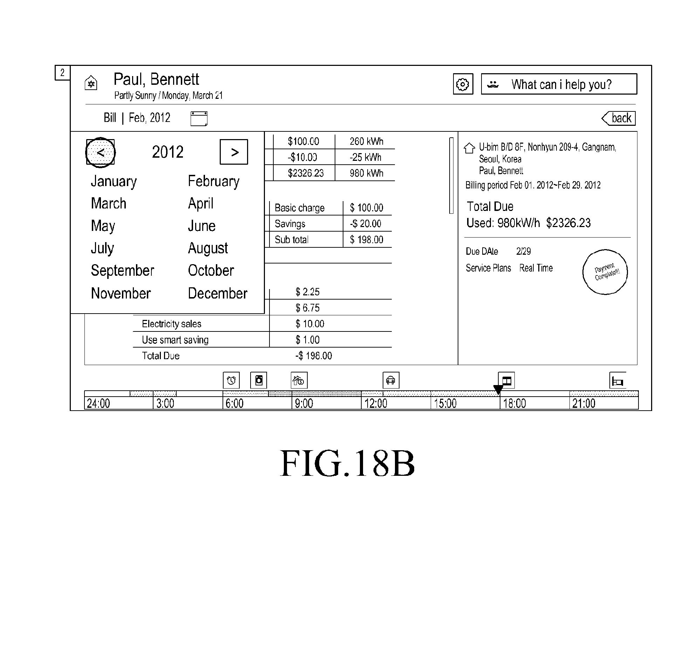

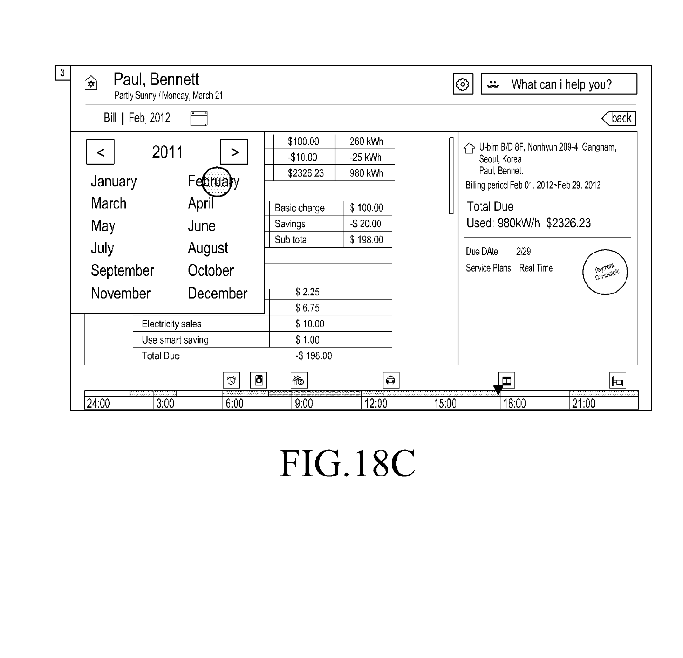

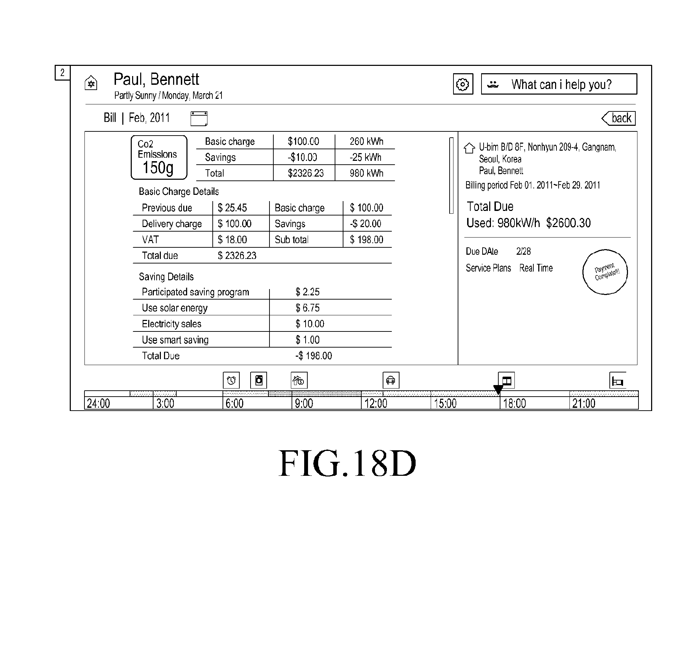

In the example of the screen illustrated in FIG. 18a, the user inquires about a bill screen of February 2012, and then if selecting a bill of February 2011 on a menu screen as illustrated in FIGs. 18b and 18c, then the user may inquire about the bill of February 2011 as illustrated in FIG. 18d. Thus, the user may compare and inquire about a power consumption fee and savings on a year basis and on a month basis, thus being provided with an efficient power management service.

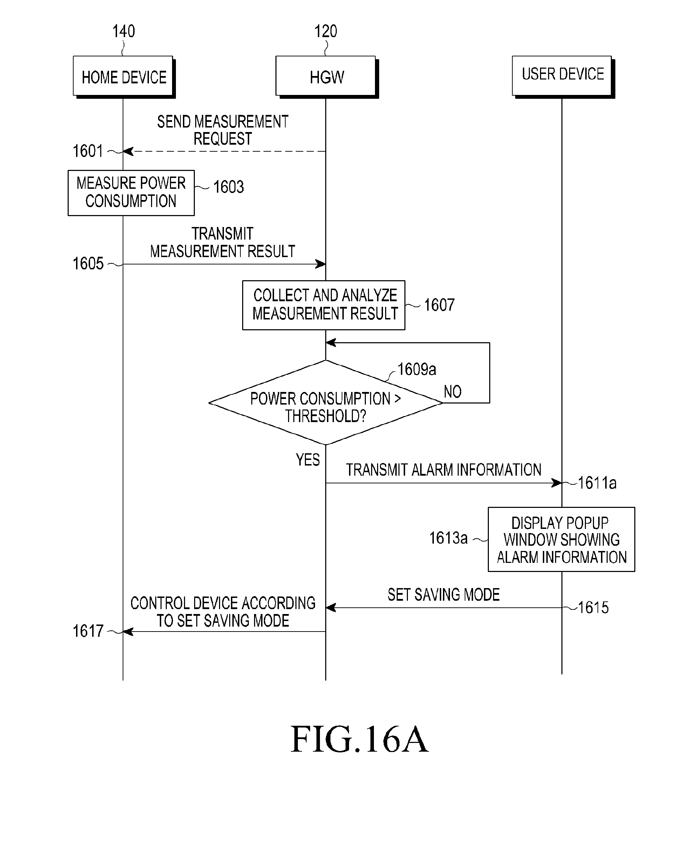

FIG. 16a is a ladder diagram illustrating an energy saving mode procedure executed in a home network system according to an embodiment of the present disclosure.

Operations in steps 1601 through 1607 of FIG. 16a are identical to those in steps 1301 through 1307 of FIG. 13 and thus will not be described in detail.

If power consumption information of the home devices 140 are analyzed in step 1607, the HGW 120 monitors whether at least one of a total power consumption, a room-specific power consumption, a device-specific power consumption, and a period-specific power consumption or at least one power consumption selected from among these power consumptions exceeds a predetermined (or preset) threshold in step 1609a, and if a power consumption exceeding the threshold is detected, the HGW 120 transmits alarm information to the user device in step 1611a.

Then, in step 1613a, the energy management application of the user device detects reception of the alarm information and outputs a popup window displaying the alarm information through the display unit of the user device. In step 1615, if the user sets an operation mode of at least one home device 140 or an operation mode of at least one home device having a power consumption exceeding a threshold by using a UI screen of the energy saving mode provided through the popup window, then the user device sends a control command corresponding to the set energy saving mode to the HGW 120. Then, in step 1617, the HGW 120 receives the control command to control operations of at least one corresponding home device according to the set energy saving mode.

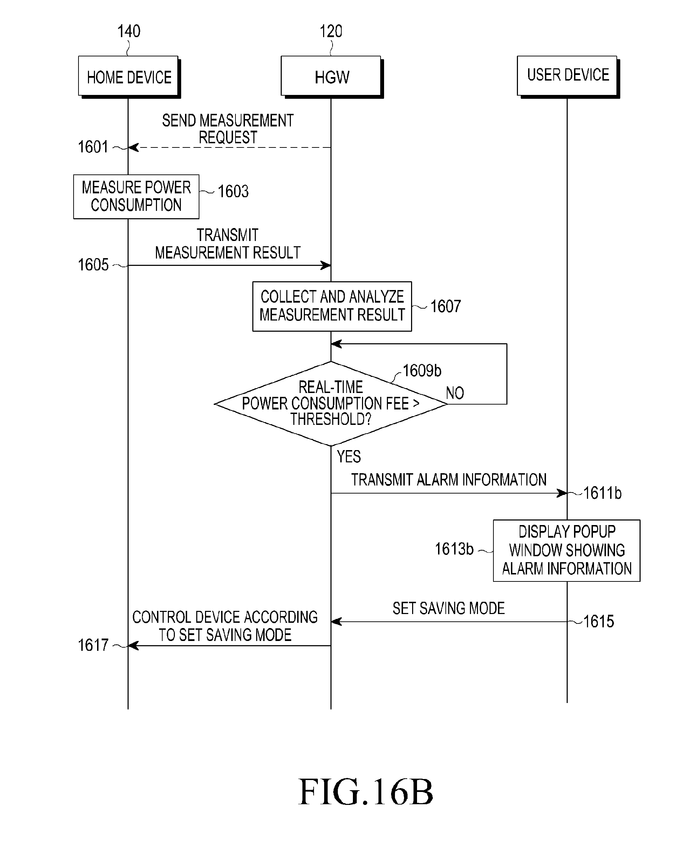

FIG. 16b is a ladder diagram illustrating an energy saving mode procedure executed in a home network system according to another embodiment of the present disclosure.

Operations in steps 1601 through 1607 of FIG. 16b are identical to those in steps 1301 through 1307 of FIG. 13 and thus will not be described in detail.

If the power consumption information of the home devices 140 are analyzed in step 1607, the HGW 120 calculates a real-time power consumption fee based on the power unit-price information received from the external server and the power consumption information and monitors whether the calculated real-time power consumption fee exceeds a predetermined (or preset) threshold in step 1609b, and if the calculated real-time power consumption fee exceeds the predetermined threshold, the HGW 120 transmits alarm information indicating that the real-time power consumption fee exceeds the threshold to the user device in step 1611b. Herein, a threshold consumption fee set as the threshold may be set in advance through the user device. In step 1613b, the energy management application of the user device detects reception of the alarm information, and outputs a popup window displaying the alarm information through the display unit of the user device. In step 1615, if the user sets an operation mode of at least one home device corresponding to the power consumption fee exceeding the threshold by using the UI screen in the energy saving mode, which is provided through the popup window, then the user device sends a control command corresponding to the set energy saving mode to the HGW 120.

In another embodiment, the control command corresponding to the energy saving mode may be a control command for limiting power consumption of all the home devices or at least one home device selected or preset by the user device. In step 1617, the HGW 120 receives the control command to control an operation of the at least one corresponding home device in the set energy saving mode.

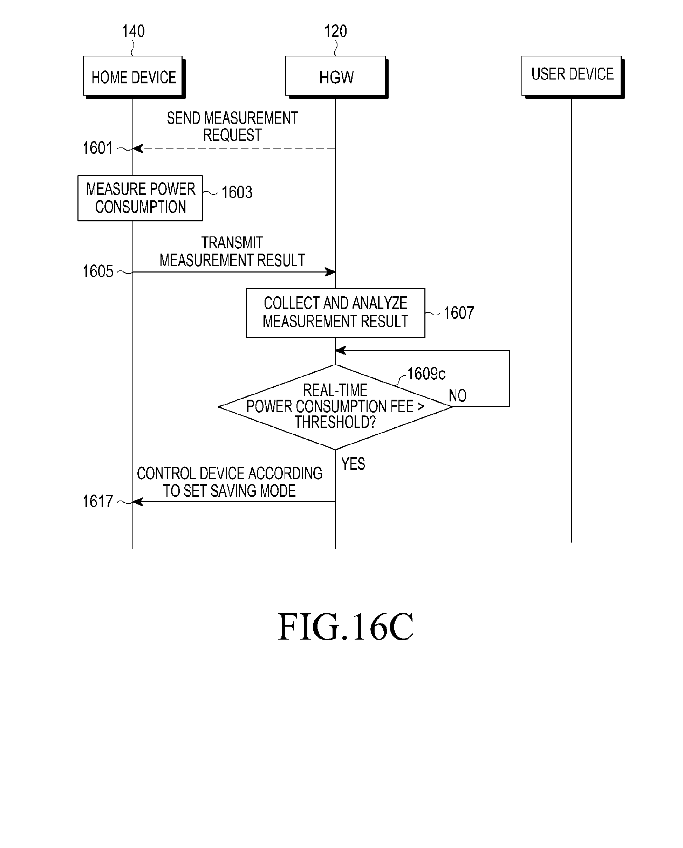

FIG. 16c is a ladder diagram illustrating an energy saving mode procedure executed in a home network according to another embodiment of the present disclosure, in which steps 1611b through 1615 of FIG. 16B of transmitting alarm information to the user device to set the energy saving mode are omitted.

Operations in steps 1601 through 1607 of FIG. 16c are identical to those in steps 1301 through 1307 of FIG. 13 and thus will not be described in detail.

If power consumption information of the home devices 140 are analyzed in step 1607, the HGW 120 calculates a real-time power consumption fee based on power unit-price information received from the external server and the power consumption information, monitors whether the calculated real-time power consumption fee exceeds a predetermined (or preset) threshold in step 1609c, and if the calculated real-time power consumption fee exceeds the threshold, the HGW 120 controls operations of at least one corresponding home device in the preset energy saving mode. The operations in the energy saving mode are as shown in <Table 1>. If the real-time power consumption fee exceeds the threshold in step 1609c, the HGW 120 may also limit power consumption of at least one previously selected home device.

Although not illustrated in FIG. 16, a home device determined to be an energy over-consuming device as a result of the analysis of step 1607 may be displayed in the form of a separate icon or a total number of and power consumptions of energy over-consuming devices may be separately displayed. In another embodiment, the HGW 120 may notify the user device that a home device consuming power exceeding a rated power is an abnormal operation device, thus preventing any risk that may be caused by an abnormal operation of the home device. In another embodiment of the present disclosure, the home devices 140 executing the energy saving mode may feed the execution result to the HGW 120 or if an abnormal operation is performed, the corresponding home device 140 may directly report the abnormal operation to the HGW 120.

## Claims

1. A method for managing energy consumption in a home network system comprising multiple home devices, the method comprising:
collecting measurement results of power consumptions of the respective multiple home devices;
generating power consumption information of the multiple home devices by analyzing the collected measurement results; and
transmitting the generated power consumption information to a user device if receiving a request for transmitting the power consumption information from the user device,
wherein the power consumption information comprises in-home room-specific power consumption information.

2. The method of claim 1, wherein the generating of the power consumption information comprises calculating room-specific power consumptions of the respective multiple home devices based on the measurement results of the power consumptions and room-specific location information of the multiple home devices.

3. The method of claim 1, wherein the room-specific power consumption information corresponds to a location of each room in in-home floor plan information.

4. The method of claim 1, further comprising providing the floor plan information to the user device.

5. The method of claim 1, further comprising re-generating the power consumption information based on a modified room-specific layout if the room-specific layout of the floor plan information is modified by the user device.

6. The method of claim 1, wherein the measurement results of the power consumptions are periodically received from the multiple home devices.

7. The method of claim 1, further comprising calculating a power consumption fee based on power unit-price information received from an external server and the power consumption information.

8. The method of claim 1, further comprising calculating a room-specific power consumption fee based on the room-specific power consumption information and power unit-price information received from an external server,
wherein the power consumption information transmitted to the user device further comprises the room-specific power consumption fee.

9. The method of claim 1, further comprising calculating a home device-specific power consumption fee based on the power consumption information of the multiple home devices and power unit-price information received from an external server,
wherein the power consumption information transmitted to the user device further comprises the home device-specific power consumption fee.

10. The method of claim 1, further comprising transmitting alarm information to the user device, if a power consumption of at least one of the multiple home devices is greater than a predetermined threshold.

11. The method of claim 7, further comprising transmitting alarm information to the user device, if the power consumption fee is greater than a predetermined threshold.

12. The method of claim 7, further comprising sending a control command for limiting power consumption of at least one of the multiple home devices to the at least one home device, if the power consumption fee is greater than a predetermined threshold.

13. The method of claim 12, wherein the at least one home device whose power consumption is limited is selected through the user device or set in advance.

14. The method of claim 10, further comprising:
receiving a control command for controlling an operation of the at least one of the multiple home devices from the user device having received the alarm information; and
controlling the operation of the at least one home device according to the control command.

15. The method of claim 1, wherein the control command comprises at least one of a command for increasing a power consumption of the at least one home device, a command for reducing the power consumption of the at least one home device, a command for maintaining the power consumption of the at least one home device, and a command for interrupting consumption of power by the at least one home device.

16. The method of claim 1, wherein the user device comprises at least one of a smart Television (TV), a mobile terminal, a tablet Personal Computer (PC), a remote controller, and an Internet Protocol (IP)-based wired/wireless phone.

17. An apparatus for managing energy consumption in a home network system comprising multiple home devices, the apparatus comprising:
at least one communication module configured to communicate with the multiple home devices and a user device in a wired/wireless manner; and
a controller configured to collect measurement results of power consumptions of the respective multiple home devices through the communication module, generate power consumption information of the multiple home devices by analyzing the collected measurement results, and transmit the generated power consumption information to a user device if receiving a request for transmitting the power consumption information from the user device,
wherein the power consumption information comprises in-home room-specific power consumption information.

18. The apparatus of claim 17 adapted to operate any one of claim 2 to claim 16.

19. A method for managing energy consumption in a home network system comprising multiple home devices, the method comprising:
sending a request for power consumption information to a network entity, the network entity collecting measurement results of power consumptions of the respective multiple home devices and generating the power consumption information of the multiple home devices by analyzing the collected measurement results; and
receiving the power consumption information from the network entity in response to the request,
wherein the power consumption information comprises in-home room-specific power consumption information.

20. The method of claim 19, wherein the network entity comprises one of a Home GateWay (HGW) connected with the multiple home devices and a server connected with the HGW.

21. The method of claim 19, further comprising displaying the room-specific power consumption information by using in-home floor plan information.

22. The method of claim 21, further comprising receiving power consumption information re-generated based on a modified room-specific layout from the network entity, if the room-specific layout of the floor plan information is modified through a User Interface (UI).

23. The method of claim 19, further comprising receiving alarm information from the network entity, if a power consumption of at least one of the multiple home devices or a power consumption fee calculated using the power consumption information is greater than a predetermined threshold.

24. The method of claim 23, further comprising transmitting a control command for limiting power consumption of at least one of the multiple home devices to the network entity, if receiving the alarm information.

25. The method of claim 24, wherein the control command comprises at least one of a command for increasing the power consumption of the at least one home device, a command for reducing the power consumption of the at least one home device, a command for maintaining the power consumption of the at least one home device, and a command for interrupting consumption of power by the at least one home device.

26. A user device in a home network system comprising multiple home devices, the user device comprising:
at least one communication module configured to communicate with a network entity that controls operations of the multiple home devices; and
a controller configured to control an operation of sending a request for power consumption information to the network entity and an operation of receiving the power consumption information from the network entity in response to the request, the network entity collecting measurement results of power consumptions of the respective multiple home devices and generating the power consumption information of the multiple home devices by analyzing the collected measurement results,
wherein the power consumption information comprises in-home room-specific power consumption information.

27. The user device of claim 26 adapted to operate any one of claim 20 to claim 25.
